(19) **Europäisches Patentamt**

**European Patent Office**

**Office européen des brevets**

(11) Veröffentlichungsnummer: **0 277 156 B1**

## (12) EUROPÄISCHE PATENTSCHRIFT

(45) Veröffentlichungstag der Patentschrift:
07.08.91 Patentblatt 91/32

(51) Int. Cl.$^5$: **A61C 15/02**

(21) Anmeldenummer: **87904831.2**

(22) Anmeldetag: **12.08.87**

(86) Internationale Anmeldenummer:
**PCT/CH87/00097**

(87) Internationale Veröffentlichungsnummer:
**WO 88/01154 25.02.88 Gazette 88/05**

(54) ZAHNREINIGER.

(30) Priorität: **14.08.86 CH 3283/86**

(43) Veröffentlichungstag der Anmeldung:
**10.08.88 Patentblatt 88/32**

(45) Bekanntmachung des Hinweises auf die
Patenterteilung:
**07.08.91 Patentblatt 91/32**

(84) Benannte Vertragsstaaten:
**AT BE CH DE FR GB IT LI LU NL SE**

(56) Entgegenhaltungen:
**WO-A-82/01126**
**CH-A- 211 202**
**DE-A- 2 925 020**
**FR-A- 2 220 234**
**FR-A- 2 519 543**

(73) Patentinhaber: **Saxer, Ulrich P.**
**Wirzenweid 55**
**CH-8053 Zürich (CH)**
Patentinhaber: **Koller, Walter**
**Meersburgwiesen**
**CH-9205 Waldkirch (CH)**
Patentinhaber: **Aschwanden, Franz**
**Berchtrüti 31**
**CH-6442 Gersau (CH)**

(72) Erfinder: **BUZZI, Carlo Alberto**
**Stauffacherstrasse 98**
**CH-8004 Zürich (CH)**
Erfinder: **SAXER, Ulrich Peter**
**Steinbrüchelstr. 30**
**CH-8053 Zürich (CH)**
Erfinder: **STÄGER, Paul A.**
**Lindenstrasse 128**
**CH-8307 Effretikon (CH)**

(74) Vertreter: **Justitz-Wormser, Daisy P.,**
**Dipl.-Chem. et al**
**PATENTANWALTS-BUREAU ISLER AG**
**Postfach 6940**
**CH-8023 Zürich (CH)**

## Beschreibung

Zur Zahnreinigung, insbesondere zur Reinigung der Zahnzwischenräume wurden Zahnstocher verschiedener Art vorgeschlagen. Die üblichen Holz- und Kiel-Zahn-stocher dienen vor allem zur Entfernung von Speiseresten aus den Zahnzwischenräumen. Eine bessere Wirkung erzielen jene Zahnstocher, deren Holz durch die Einwirkung des Zahn-Speichels im Zahnzwischenraum aufquillt, wodurch sie den Zwischenraum ganz ausfüllen und Plaque-Ansätze wenigstens teilweise lösen.

WO 82/01126 offenbart einen Zahnreiniger aus Kunststoff, dessen eines Ende in Form eines konischen Zahnstochers ausgebildet ist, während das andere Ende jochförmig abgebogen ist und ebenfalls konisch ausläuft. Beide Enden können mit Bürstengliedern versehen werden, die während der Verformung des Kunststoffmaterials gebildet werden.

FR A 2519543 beschreibt einen Zahnstocher aus Kunststoff gemäß dem Oberbegriff von Anspruch 1, der derart ausgebildet ist, dass er sich an die Form des Zahnzwischenraumes anpassen kann ; zur Verstärkung der Reinigungskraft kann er von pflanzlichen oder thermoplastischen Fasern umgeben sein.

Es wurde nun gefunden, dass die Wirkung der heute bekannten Zahnstocher wesentlich erhöht werden kann, wenn dieselben beflockt sind. Damit können die Zahnzwischenräume mit einer Art "Mikroflaschenputzer" selbst im konkaven Zahnzwischenraum gebürstet und damit gereinigt werden.

Der erfindungsgemässe Zahnreiniger ist in Patentanspruch 1 definiert.

Gegenüber den üblichen Zahnstochern weist der neue Zahnreiniger den Vorteil auf, dass er wesentlich wirksamer zwischen den Brücken-Ankern und im Sulcusbereich reinigt.

Ausserden gelingt es, ihn so dünn zu gestalten, dass er auch in die engsten Zwischenräume hineingestossen werden kann, um diese von Plaque zu befreien.

Als Material für die Herstellung des neuen Zahnreinigers kommen für den Träger Holz, Bambus sowie alle physiologisch unbedenklichen Kunststoffe und Metall in Frage, die genügend Biegefestigkeit besitzen, um den Reiniger trotz Widerstand in den Zahnzwischenraum zu stossen. Kunststoffe und Metalle können zu einem dünnen Blatt gegossen und nach dem Erstarren gestanzt oder zu runden oder eckigen Drähten verarbeitet werden. Es können unter anderen auch Träger aus glas- oder kohlenfaserverstärkten Kunststoffen verwendet werden. Der Träger kann derart durch Aufrauhen oder spezielle Formgebung vorbereitet werden, dass zur Beflockung eine bessere Haftung des Klebstoffes erreicht werden kann. Die Formgebung kann zusätzlich die Wirksamkeit und Stabilität des Zahnstochers erhöhen, indem die Kunststoff- oder Metallfolien z.B. wellblechartig verformt werden. Am idealsten ist die direkte Aufflockung der Borsten auf einen erhitzten Kunststoffträger, ohne Klebstoff, so dass eine eigentliche Materialverschweissung stattfindet. Ferner werden bei Kunststoffträgern ausgezeichnete Resultate erzielt, wenn deren Oberfläche mit einem Lösungsmittel angelöst wird und die derart behandelte Oberfläche beflockt wird. Für gewisse Tragermaterialien ist die Verwendung eines Klebstoffes, z.B. Araldit, erforderlich für die Beflockung.

Der Träger weist zweckmässigerweise eine Länge von 5 bis 15 cm und die Form eines Stabes von z.B. rundem, drei- oder mehreckigem, gleichmässigem oder ungleichmässigem Querschnitt auf. Das einzuführende Ende kann stumpf oder vorzugsweise auslaufend, kompakt oder hohl sein. Ebenso kann die Beflockung gleichmässig oder ungleichmässig, ganz oder teilweise vorliegen.

Der Träger kann aber auch drahtförmig ausgebildet sein, wobei sein hinteres Ende zweckmässigerweise in einem rohrförmigen Halter, z.B. aus Kunststoff, verankert ist, insbesondere derart, dass der Träger in verschiedenen Lagen fixiert werden kann, wodurch seine Länge den jeweiligen Bedürfnissen angepasst werden kann.

Für die Borsten eignen sich hauptsächlich Kunststoffe, die sich zu Borsten kleinster Dimension verarbeiten lassen, z.B. Nylon. Die Borsten weisen mit Vorteil eine Lange von ca. 0,3 bis 0,8 mm, vorzugsweise etwa 0,5 mm und einen Gewicht von etwa 1,7 bis 5 dtex, vorzugsweise etwa 3,3 dtex auf, wobei die Borsten verschiedener Länge und Stärke auf denselben Träger aufgebracht werden können. Die Materialien können farblos oder beliebig in der Masse gefärbt sein

Die Beflockung erfolgt nach bekannten Verfahren, wie oben erwähnt, z.B. unter Verwendung eines geeigneten physiologisch unbedenklichen Klebstoffes oder durch Beflocken einer noch klebrigen thermoplastischen Trägeroberfläche oder durch Beflocken einer mit einem Lösungsmittel angelösten Kunststoffoberfläche.

Der Zahnreiniger kann mehrfarbig beflockt sein, wobei jede Farbe eine andere Borstenlänge anzeigt. Farben können auch Durchmesser und Art des Zahnstochers markieren oder einfach nur die Herkunft eines Landes oder einer Firma. Am Einführungsende des Zahnstochers wird die Beflockung mit Vorteil auslaufend gestaltet. Es ist auch möglich, das Ende mit kürzeren Borsten zu beflocken. Der beflockte Zahnstocher kann mit Desinfektionsmitteln, Fluoriden, Geschmacksstoffen oder Zahnreinigungsmitteln versehen werden.

Es ist selbstverständlich, dass der beflockte Zahnstocher in der Fabrikation von schlecht haftenden Borsten befreit wird, z.B. mittels Luft und Bürsten bevor er sterilisiert und einzeln oder in grösserer Anzahl verpackt und gegebenenfalls zu einem Set mit diversen Grössen zusammengestellt wird.

In der beiliegenden Zeichnung stellt :

Fig. 1 einen Zahnreiniger dar, dessen Träger einen runden, ovalen oder dreieckigen Querschnitt aufweist und bis zum Einführungsende beflockt ist,

Fig. 2 einen Zahnreiniger, dessen Träger nur teilweise beflockt ist und am Einführungsende spitz auslauft ;

Fig. 3 einen Zahnreiniger, dessen Trager in Intervallen das Profil oder den Durchmesser ändert, um eine Art Sägezahnwirkung bei gleichlangen Borsten zu erhalten ;

Fig. 4 einen Lahnreiniger, dessen Beflockung in einer Spirale aufgetragen ist ; und

Fig. 5 eine Ausführungsform, in welcher der drahtförmige, beflockte Trager in einer rohrförmigen Hülse untergebracht ist, aus welcher er in beliebiger Lange herausgestossen und fixiert werden kann, dar.

In der Zeichnung ist der Träger jeweils mit 1, die Beflockung mit 2 und das Einführungsende mit 3 bezeichnet.

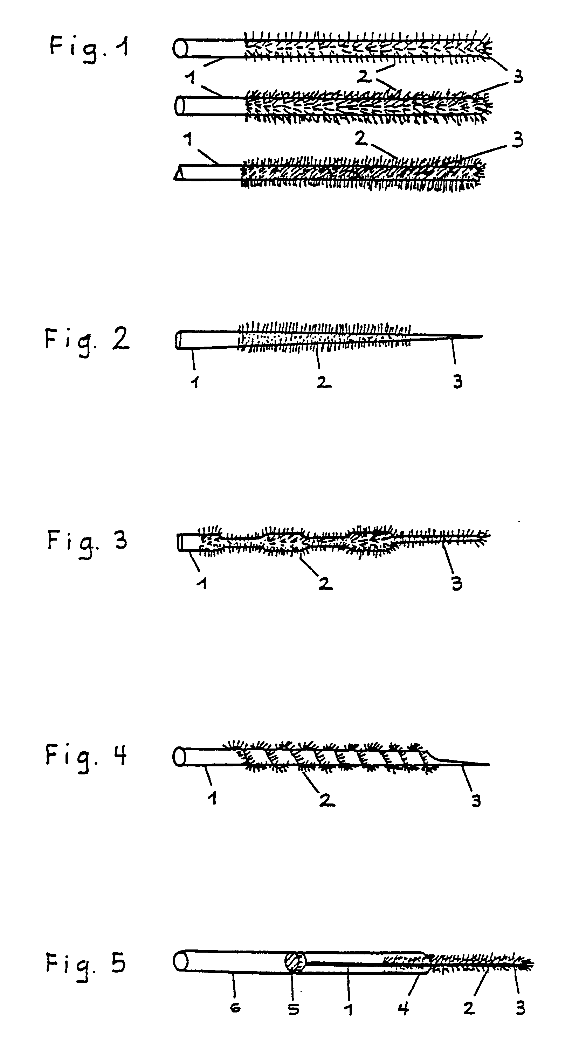

Wie aus den Fig. 1 bis 3 ersichtlich ist, kann die Beflockung entweder die ganze Flache des Trägers bedecken oder nur einen Teil davon, z.B. das Einführungsende unbedeckt lassen oder spiralförmig oder in jedem beliebigen Muster angeordnet sein. Es ist z.B. möglich, mit der Beflockung Markenzeichen oder Buchstaben, usw. anzubringen. Ebenso kann aber auch durch Auswahl verschiedener Borstenfarben auf eine Verschiedenheit der Länge und/oder Dicke der Borsten hingewiesen werden.

In Fig. 1 ist das Einführungsende stumpf, in Fig. 2 spitz und in Fig. 4 kielförmig ausgebildet. Bei engen Zahnzwischenräumen empfiehlt sich die Verwendung eines spitzen oder kielförmigen Einführungsendes.

Fig. 5 zeigt eine Ausführungsform mit einem drahtförmigen Trager von etwa 0,3 mm Durchmesser aus Metall, kohlenstoff- oder glasfaserverstärktem Kunststoff, der auf einer Länge von etwa 5 cm gleichmassig beflockt ist. Der Trager ist an seinem hinteren Ende an der Halterung 4 befestigt und in die Kunststoffhülle 6 eingeschoben. Mit Hilfe des Nockens 5, der in einer Längsnut der Hülse bewegt und an verschiedenen Stellen durch leichte Drehung in eine Ausnehmung (nicht dargestellt) eingerastet werden kann, lasst sich der Reiniger entweder ganz in die Hülse zurückziehen oder in der gewünschten Hohe fixieren.

Es ist für den Fachmann selbstverständlich, dass zahlreiche weitere Ausführungsformen und Materialien für den Träger, die Borsten und die Anordnung möglich sind.

## Patentansprüche

1. Zahnreiniger mit länglichem, biegesteifem Träger (1) dadurch gekennzeichnet, daß der Träger (1) mit feinen Kunststoffborsten, mit einem Gewicht, von vorzugsweise 1,7 bis 3,3 dtex, mindestens teilweise beflockt ist.

2. Zahnreiniger nach Patentanspruch 1, dadurch gekennzeichnet, dass der Träger mindestens an dem in den Zahnzwischenraum einzuführenden Ende ganz oder auslaufend beflockt ist.

3. Zahnreiniger nach Patentanspruch 1 oder 2, dadurch gekennzeichnet, dass das in den Zahnzwischenraum einzuführende Ende unbeflockt ist.

4. Zahnreiniger nach einem der Patentansprüche 1 bis 3, dadurch gekennzeichnet, dass der Träger derart vorgeformt ist, dass bei gleich langen Borsten infolge von Variationen des Trägerquerschnittes Sägezahnwirkung auftritt.

5. Zahnreiniger nach einem der Patentansprüche 1 bis 4, dadurch gekennzeichnet, dass mindestens ein Teil der Borsten mit reinigenden und/oder desinfizierenden Mitteln versehen ist.

6. Zahnreiniger nach einem der Patentansprüche 1 bis 5, dadurch gekennzeichnet, dass der Träger aus Metall oder Kunststoff, der gegebenenfalls kohlenfaser- oder glasfaserverstärkt ist, besteht.

## Claims

1. Dental cleaner having an elongate, rigid support (1) characterized in that the support (1) is at lease flocked with fine plastic bristles having a weight of preferably 1,7 to 3,3 dtex.

2. Dental cleaner according to patent claim 1, characterized in that the support is flocked completely or in a tapering manner, at least at that end which is to be introduced into the interdental embrasure.

3. Dental cleaner according to patent claim 1 or 2, characterized in that the end to be introduced into the interdental embrasure is unflocked.

4. Dental cleaner according to any of patent claims 1 to 3, characterized in that the support is preshaped in such a way that, with bristles of equal length, a sawtooth effect occurs due to variations in the cross-section of the support.

5. Dental cleaner according to any of patent claims 1 to 4, characterized in that at least some of the bristles are provided with cleaning and/or disinfecting agents.

6. Dental cleaner according to any of patent claims 1 to 5, characterized in that the support consists of metal or plastic, which may be carbon fibre- or glass fibre-reinforced.

## Revendications

1. Cure-dents comportant un support allongé (1) résistant à la flexion, caractérisé en ce que le support (1) est floqué au moins partiellement avec de fins poils en matière plastique possédant un poids compris de préférence entre 1,7 et 3,3 dtex.

2. Cure-dents selon la revendication 1, caractérisé en ce que le support est floqué en totalité ou sur la pointe de l'extrémité devant être introduite dans l'espace présent entre les dents.

3. Cure-dents selon la revendication 1 ou 2, caractérisé en ce que l'extrémité devant être introduite dans l'espace présent entre les dents n'est pas floquée.

4. Cure-dents selon l'une des revendications 1 à 3, caractérisé en ce que le support est préformé de manière que, dans le cas de poils de même longueur, il produit une action en dents de scie en raison de variations de sa section transversale.

5. Cure-dents selon l'une des revendications 1 à 4, caractérisé en ce qu'au moins une partie des poils comporte des agents nettoyants et/ou désinfectants.

6. Cure-dents selon l'une des revendications 1 à 5, caractérisé en ce que le support est réalisé en un métal ou une matière plastique, qui est éventuellement renforcée par des fibres de carbone ou par des fibres de verre.

EP 0 277 156 B1

Fig. 1

Fig. 2

Fig. 3

Fig. 4

Fig. 5